# EUROPEAN PATENT SPECIFICATION

(11) **EP 3 696 121 B1**
(45) Date of publication and mention of the grant of the patent: **11.10.2023**
(21) Application number: 20156914.2
(22) Date of filing: 12.02.2020
(51) Int. Cl.: B25J 15/10, B25J 15/00, B65G 47/90, B65G 49/04, C25D 17/06, C23C 18/16, B25J 5/04, C25C 7/00

(54) **MACHINE FOR THE HANDLING OF OBJECT-HOLDING CONTAINERS**
MASCHINE ZUR HANDHABUNG VON OBJEKTAUFNAHMEBEHÄLTERN
MACHINE POUR LA MANIPULATION DE RÉCIPIENTS DE SUPPORT D'OBJETS

(30) Priority: 14.02.2019 IT 201900002173
(43) Date of publication of application: 19.08.2020
(73) Proprietor: LM Industry S.R.L., 36056 Tezze sul Brenta (VI) (IT)
(72) Inventor: LANDO, DENIS, 36028 ROSSANO VENETO (VI) (IT); LANDO, WALTER, 36050 BELVEDERE DI TEZZE SUL BRENTA (VI) (IT)
(74) Representative: Marchioro, Paolo

(56) References cited:
- CN-B- 103 878 138
- DE-A1- 10 161 086
- DE-A1- 10 306 826
- GB-A- 781 465
- JP-A- 2005 026 596
- US-A- 4 162 951
- US-B1- 6 306 269

## Description

The invention relates to a machine for the handling of object-holding containers.

The present invention consists of a machine, in the sector known as "carriage", which can be set up in any plant for surface coating treatments; in these plants, in general, the pieces to be treated are loaded in bulk, or even in an orderly way, in special containers, such as baskets, which containers are immersed in treatment tanks and then extracted for the subsequent drying steps.

These containers have an ordered matrix of through openings of a size such as to cause the retention of the items to be treated inside and such as to allow the passage of the treatment fluids.

By way of example, and not limited to, the coating process known as 'lamellar zinc plating' applicable on small metal parts of various kinds loaded in bulk into the containers is described.

The tasks described below are typically also valid for other similar coating processes and pertinent to the invention.

The known carriage, applied to a lamellar zinc plating process, operates with three main tasks:
- transfer of the containers following a predetermined sequence of the process, for example a first movement of one or more containers from a loading area to a painting equipment, and a subsequent second movement from the painting equipment to an emptying area of the containers inside a drying oven;
- handling of the containers during a surface covering treatment, typically by immersing the containers in the paint;
- treatment for removing excess paint from small parts, or other items treated and contained in the containers, by centrifugation of the containers themselves.

The transfer of the containers takes place through an automatic system for coupling to the carriage and uncoupling from the carriage, which carriage is constrained to a structure that supports it and allows it to shift the containers in two or three directions of the space that are orthogonal to each other.

During the surface coating, the containers are immersed in a fluid, while their content is kept in motion thanks to the automatic system of inclination of the axis of the containers and the automatic system of rotation of the same containers around their main axis of symmetry.

In this way, it is ensured that the points of mutual contact between the pieces contained in a container are constantly changing, allowing the fluid to reach the entire surface of each small item contained in the container; this inclined rotation of each container also allows the escape of any air bubbles created inside the cavities possibly present in the small parts.

This guarantees total coverage of the surfaces of the items being treated. Once the immersion impregnation step has ended, this one is followed by an emersion step and a centrifugation step in an emersion set-up.

Today, this centrifugation step is carried out according to two alternative methods:
- either by rotation of the containers around their own axis of symmetry;
- or by rotation of a group of containers around a rotation axis of the entire group, with no rotation of the single container around its axis.

These centrifugation methods both have an important drawback, constituted by the impossibility of letting the fluid escape from any cavities of the treated items, which cavities are oriented with their concavity turned towards the radial direction opposite to the centrifugal force; infact, this situation prevents the treatment fluid from escaping from these cavities, with consequent incorrect execution of the step of removal of the fluid, that is the paint, in excess.

DE 103 06 826 A1 discloses a machine for the handling of object-holding baskets in a surface coating treatment plant according to the preamble of claim 1.

The aim of the present invention is to provide a machine for the handling of object-holding containers capable of overcoming the aforementioned drawbacks and limits of the prior art.

In particular, an object of the invention is to provide a machine for the handling of object-holding containers which allows better removal of a fluid trapped in the objects present in the containers.

Another object of the invention is to provide a safe and reliable machine like the handling trolleys for containers of known type.

A further object of the invention is to provide a machine for the handling of object-holding containers which allows to speed up and optimize the treatment and removal times of excess fluid with respect to the times that can currently be achieved.

The above-mentioned aim and objects are achieved by a machine for the handling of object-holding containers according to claim 1.

Further characteristics of the machine for the handling of object-holding containers according to claim 1 are described in the dependent claims.

The aforesaid task and objects, together with the advantages that will be mentioned hereinafter, are indicated by the description of an embodiment of the invention, which is given by way of non-limiting example with reference to the attached drawings, where:

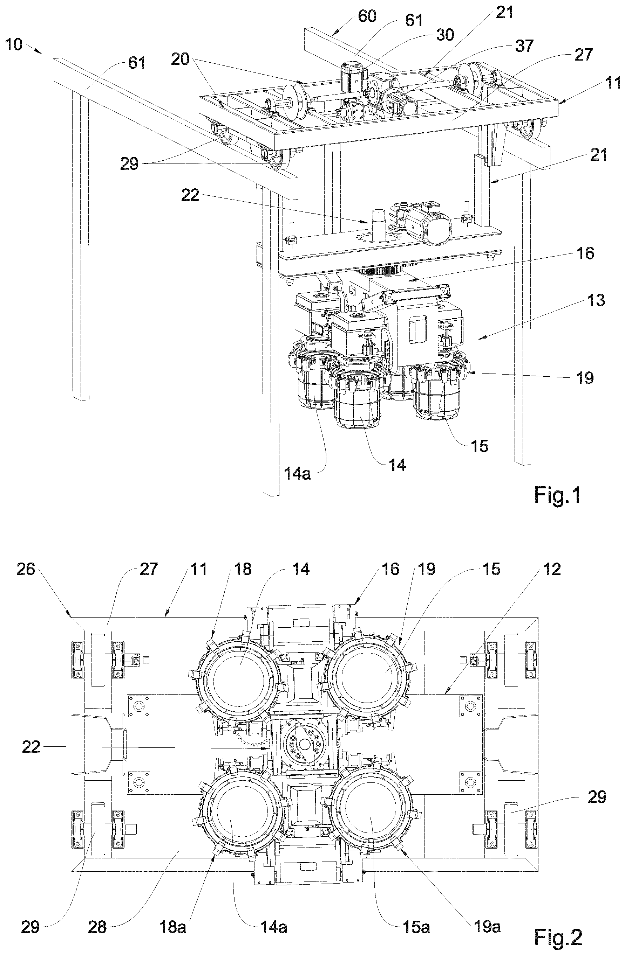

- figure 1 represents a perspective view of a machine for the handling of object-holding containers according to the invention;
- figure 2 represents a bottom view of the machine according to the invention;
- figure 3 represents a side view of the machine according to the invention in a first operating set-up;
- figure 4 represents a front view of the machine in the first operating set-up of figure 3;
- figure 5 represents a side view of the machine according to the invention in a second operating set-up;
- figure 6 represents a side view of the machine according to the invention in a third operating set-up;
- figure 7 represents a perspective view of the machine in a first or a second operating set-up;
- figure 8 represents a detail of figure 5;
- figure 9 represents a partial exploded perspective view of the machine according to the invention;
- figure 10 represents a perspective view of a detail of the machine according to the invention;
- figure 11 schematically represents a first operating step of the machine according to the invention;
- figure 12 schematically represents a second operating step of the machine according to the invention.

With reference to the aforementioned figures, a machine for the handling of object-holding containers according to the invention is indicated as a whole with the number **10.**

This machine for the handling of object-holding containers **10** according to the invention comprises:
- a carrying carriage **11,** for horizontal movement;
- a container-holding group **13,** comprising a central body **16,** connected to the carrying carriage **11,** which central body **16** is configured to carry at least two gripping groups, for example four gripping groups **18, 18a, 19** and **19a,** for blocking corresponding object-holding containers **14, 14a, 15, 15a**;
- first movement means **20** configured for the movement of the carrying carriage **11** with respect to a support structure, for example a frame resting on the ground **60** above which there are two rails **61** on which this carrying carriage **11** slides;
- second movement means **21** configured to raise and lower the container-holding group **13** with respect to the carrying carriage **11;**
- first rotation means **22** configured for the rotation of said container-holding group **13** with respect to the carrying carriage **11** around a first rotation axis **X1;**
- second rotation means **23** configured for the rotation of each gripping group **18, 18a, 19** and **19a** around a corresponding second own rotation axis **X2, X3, X4** and **X5,** with consequent rotation of the respective object-holding container blocked to each of them;
- third rotation means **24** configured to adjust the inclination of said second rotation axes **X2, X3, X4** and **X5** of said gripping groups **18, 18a, 19, 19a** with respect to a corresponding third rotation axis **X6** and **X7.**

The machine for the handling of object-holding containers **10** is to be understood to comprise at least two object-holding containers **14** and **15.**

The machine for the handling of object-holding containers **10** preferably comprises four object-holding containers **14, 14a, 15, 15a**; this configuration with four object-holding containers gives the machine **10** an optimal balance of the masses in all the rotation steps of the object-holding containers and the container-holding group **13.**

These object-holding containers **14, 14a, 15** and **15a** are constituted by baskets, of a type known per se, configured to contain items to be treated, the latter loaded in bulk, and to be immersed in treatment tanks, for example, but not exclusively, a lamellar zinc plating treatment of said items contained in the object-holding containers, and afterwards extracted for the subsequent drying steps.

These object-holding containers **14, 14a, 15** and **15a** have an ordered matrix of through openings of a size such as to cause the retention of the items to be treated inside and such as to allow the passage of the treatment fluids; these treatment fluids are present in the treatment tanks.

In the embodiment described herein of the invention, by way of example and without limitation of the invention itself, the carrying carriage **11** comprises a frame **26,** comprising a perimeter frame **27** and reinforcement crosspieces **28.** In the present embodiment, the first movement means **20,** for the movement of the carrying carriage **11** above the rails **61,** comprise two opposite pairs of wheels **29** driven, through a respective crankshaft, by a gear reducer **30** mounted on the carrying carriage **11.**

The gear reducer **30,** by way of example, is of the electric type.

Alternatively, this gear reducer **30** can be of a fluid dynamic type, or of another similar and equivalent type.

The container-holding group **13** comprises, as mentioned above, the central body **16,** connected to the carrying carriage **11** by means of the second movement means **21** described below.

The central body **16** is configured to carry four gripping groups **18, 18a, 19** and **19a.**

The central body **16** therefore comprises, in the present embodiment, four gripping groups **18, 18a, 19, 19a.**

Each of these gripping groups **18, 18a, 19, 19a** is configured to grasp an upper annular edge of an object-holding container **14, 14a, 15** and **15a.**

Each of these gripping groups **18, 18a, 19, 19a,** therefore, carries a respective object-holding container **14, 14a, 15** and **15a.**

These gripping groups **18, 18a, 19, 19a** are to be understood of a type known per se.

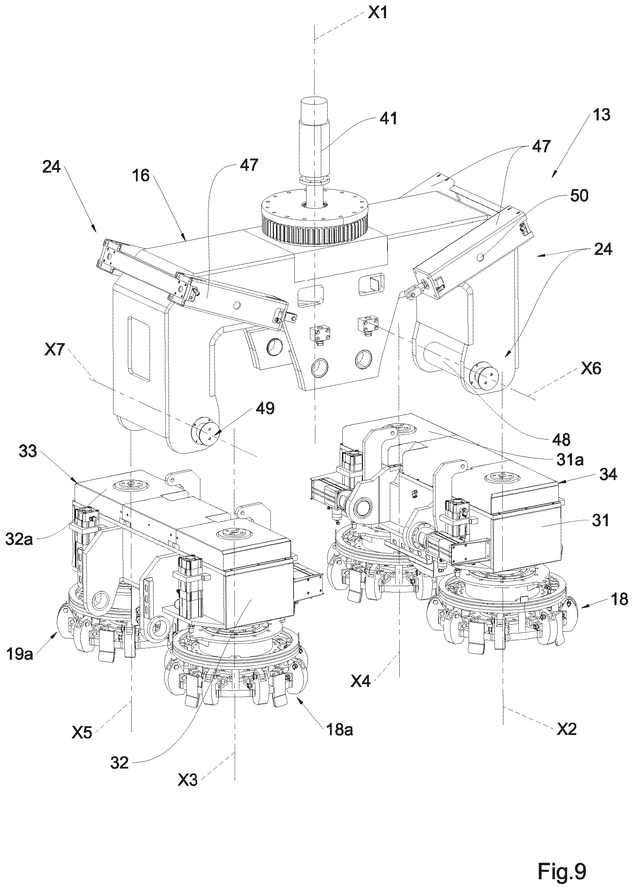

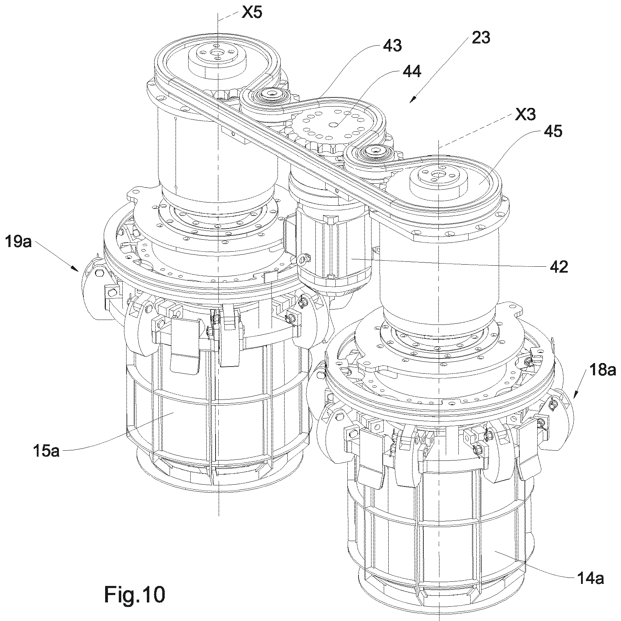

In the present embodiment, as clearly visible from figures 9 and 10, but also from other figures, these gripping groups **18, 18a, 19, 19a** are of the ring type of gripping jaws, or grippers, which gripping jaws, or grippers, are configured to grasp the upper annular edge of an object-holding container **14, 14a, 15** and **15a,** each one in a corresponding point of this upper annular edge.

Each of these gripping groups **18, 18a, 19, 19a** is supported by a corresponding rotatory arm **31, 31a, 32, 32a**.

In the present non-limiting embodiment of the invention, the rotatory arms are fixed in pairs, thus a first pair of rotatory arms **31, 31a** and a second pair of rotatory arms **32, 32a** being defined, as visible in figure 9.

The rotatory arms of the pairs of rotatory arms are made integral with each other by means of a corresponding transverse body, **33** and **34** respectively, which supports them both.

The second movement means **21,** configured to raise and lower the container-holding group **13** with respect to the carrying carriage **11,** comprise an intermediate carriage **12.**

The intermediate carriage **12** is connected to the carrying carriage **11** by means of two opposite lateral guides **35,** fixed to the carrying carriage **11,** and two sliding elements **36,** fixed to the intermediate carriage **12** and configured to slide each on a corresponding lateral guide **35.**

The lateral guides **35** develop in a vertical direction with respect to a normal operating set-up of the machine **10.**

It is to be understood that these lateral guides **35** can be inclined at an angle between -30° and +30° with respect to a vertical direction, this variant embodiment being equivalent to what is described above.

The second movement means **21** also comprise a second gear reducer **37** configured to actuate one or two lifting belts **38.**

The second gear reducer **37** is fixed to the carrying carriage **11.**

The second gear reducer **37** winds and unwinds the lifting belts **38** by means of corresponding pulleys **39** rotated by a corresponding crankshaft actuated by the gear reducer **37** itself.

The first rotation means **22,** configured for the rotation of the container-holding group **13** with respect to the carrying carriage **11** around a first rotation axis **X1,** comprise a third gear reducer **40,** fixed to the intermediate carriage **12** and configured to rotate a rotation shaft **41** to which the container-holding group **13** is fixed.

The container-holding group **13** is rotatably constrained to the intermediate carriage **12,** with means to be understood per se known, such as for example a fifth wheel or means for reducing the friction such as rolling element bearings and the like.

Each of the transverse bodies, **33** and **34** respectively, clearly visible in the exploded view of figure 9, supports, as described above, a pair of gripping groups **18, 18a, 19** and **19a.**

For example, a first transverse body **33** supports a first pair of gripping groups **18a** and **19a,** and a second transverse body **34** supports a second pair of gripping groups **18** and **19.**

The second rotation means **23,** configured for the rotation of each gripping group **18, 18a, 19** and **19a** around a corresponding second own rotation axis **X2, X3, X4** and **X5,** and clearly visible in figure 10, comprise, in this exemplary embodiment, a gear reducer **42** for each pair of such gripping groups **18, 18a, 19** and **19a,** for example for the first pair of gripping groups **18a** and **19a** in the same figure 10.

The second rotation means **23** are configured for the continuous rotation of each gripping group **18, 18a, 19** and **19a** around the corresponding second own rotation axis **X2, X3, X4** and **X5.**

The term "continuous rotation" is to be understood, in a known way, that the rotation induced on the container-holding group **13** can continue for an angle greater than 360°, in the same direction of rotation, continuously, that is without interruptions, for a certain number of revolutions and/or for a certain preset time.

This gear reducer **42** is, for example, of the pneumatic motor type.

This gear reducer **42** is to be understood as being also of an electric, or hydraulic type, or of another similar and equivalent type.

This gear reducer **42,** for example, transmits rotation and torque via a driving wheel **44,** a belt or a chain **43** and a driven wheel **45** for each of the gripping groups **18a** and **19a.**

The gear reducer **42** is advantageously interposed between the two gripping groups **18a** and **19a,** on board the same first transverse body **33,** and this equally applies to the second transverse body **34.**

The third rotation means **24,** configured to adjust the inclination of the second rotation axes **X2, X3, X4** and **X5** of the gripping groups **18, 18a, 19, 19a** with respect to a corresponding third rotation axis **X6** and **X7,** comprise actuator means for the rotation of each transverse body **33** and **34** with respect to a third rotation axis, **X6** and **X7** respectively, which third rotation axis is orthogonal to a corresponding second rotation axis **X2, X3, X4, X5.**

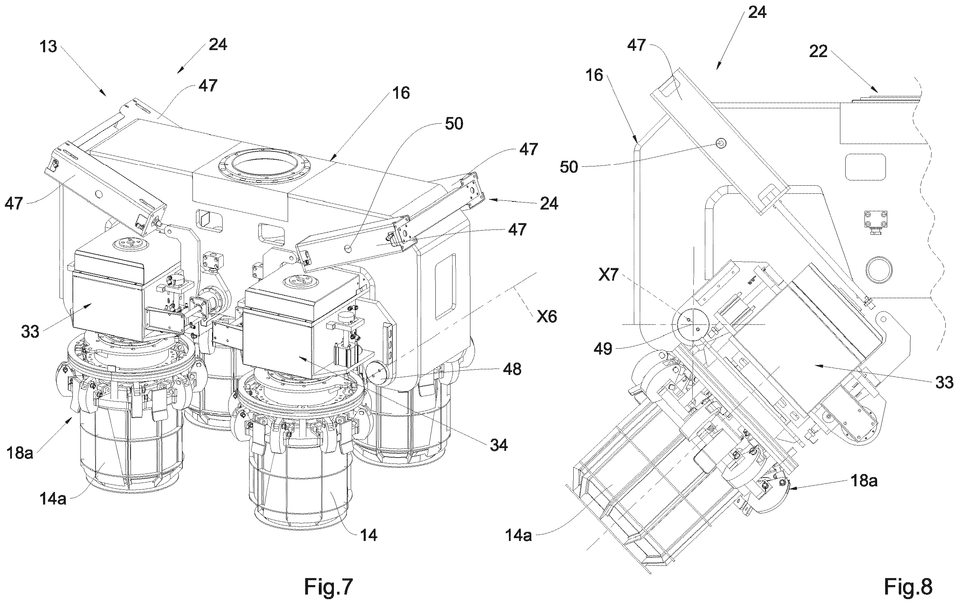

As clearly visible in figures 7 and 8, these third rotation means **24** comprise, for each transverse body **33** and **34,** two linear actuators **47** hinged coaxially to the central body **16** and adapted to push or pull a respective transverse body **33** or **34,** which transverse body **33** or **34** is in turn hinged to the central body **16** by means of a corresponding pin **48** and **49,** respectively.

The pin **48** and **49** obviously causes the rotation around the corresponding third rotation axis **X6** or **X7.**

The linear actuators **47** are for example hydraulic cylinders, or other similar and equivalent fluid dynamic cylinders.

The linear actuators **47** can also be of the electric type.

The linear actuators **47** are to be understood to be even only one for each transverse body, or alternatively also more than two, depending on the needs and technical requirements.

Hence the third rotation means **24** comprise at least one linear actuator **47.** The linear actuators **47** are hinged to the central body **16** by means of a pin **50** defining a rotation axis parallel to the third rotation axes **X6** and **X7.**

The operation of the machine for the handling of object-holding containers **10** according to the invention is exemplified below.

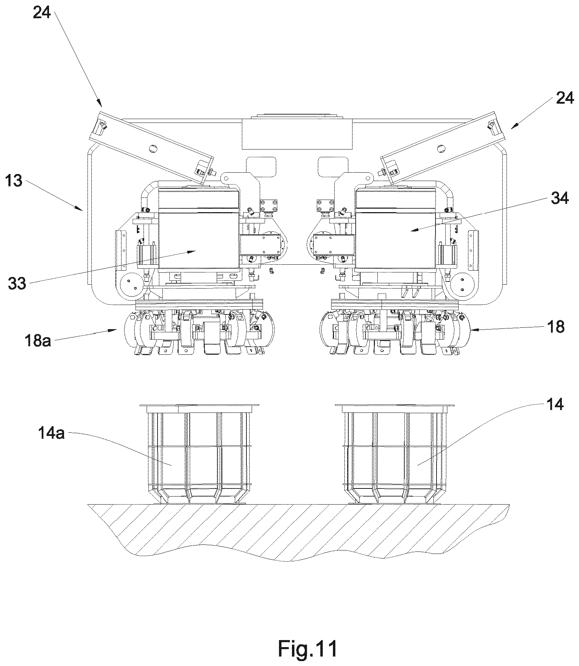

The carrying carriage **11,** for horizontal movement, sliding on the rails **61** of the frame **60** moves so as to go above the loading, or treatment, or unloading areas, as exemplified in figure 11.

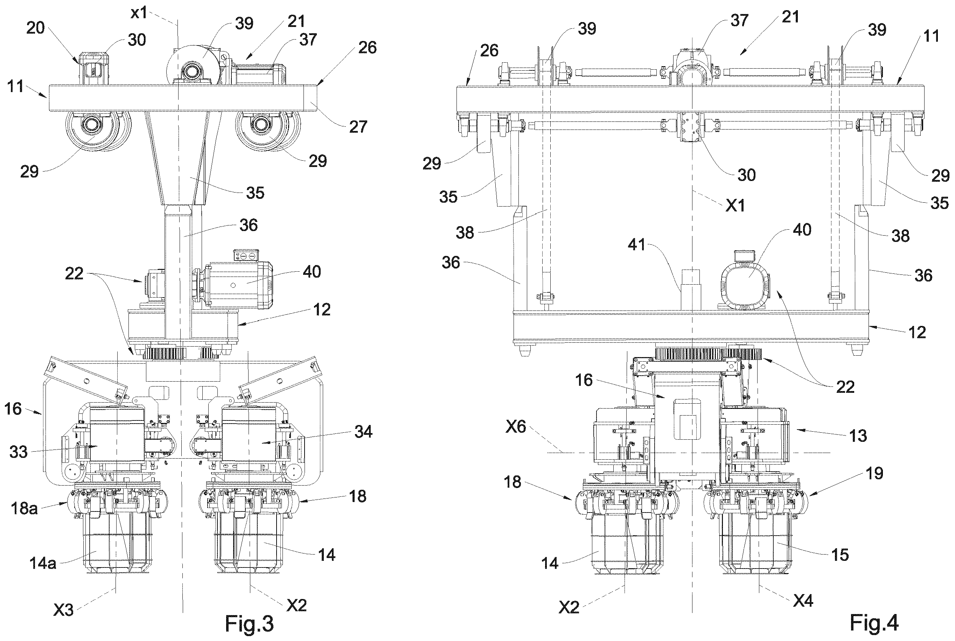

The container-holding group **13** is exemplified in a lowered operating set-up in figures 3 and 4, in which the sliding elements **36** are completely or partially withdrawn from the respective lateral guides **35.**

This lowered operating set-up is achieved by managing the second movement means **21** and is suitable for gripping or releasing operations of the containers **14, 14a, 15, 15a.**

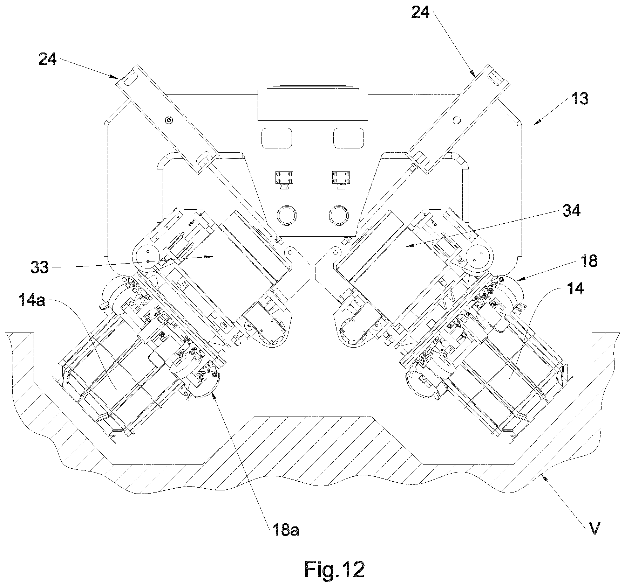

Figure 12 illustrates an operating set-up in which the gripping group **13** carries four containers **14, 14a, 15, 15a** in an inclined set-up, which is brought about by operating with the third rotation means **24,** inside a generic treatment tank **V**

This treatment tank **V** is configured to house the object-holding containers **14, 14a, 15, 15a.**

In one of its variant embodiment, the machine **10** also comprises the treatment tank **V.**

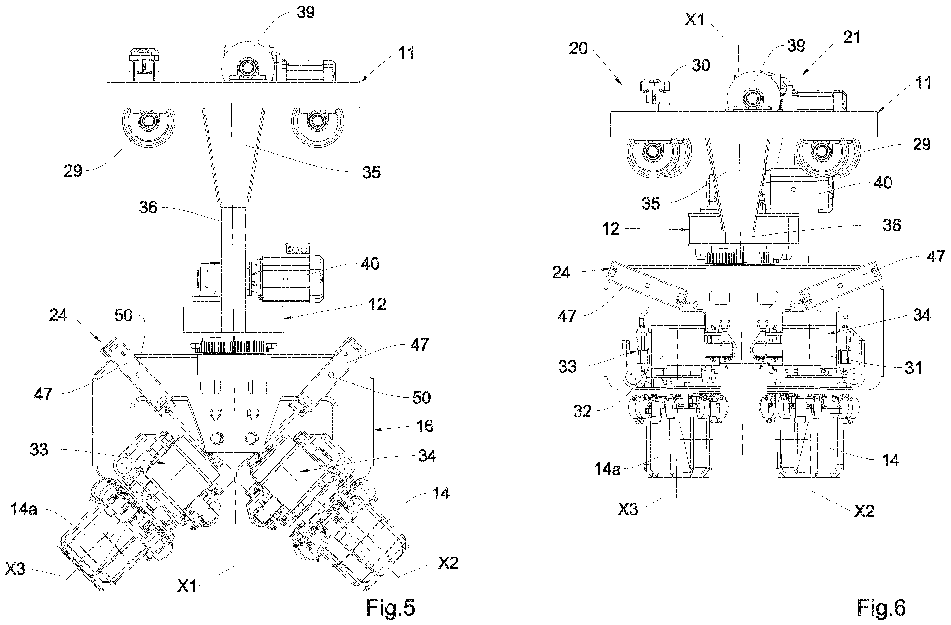

Inside the tank **V** the containers are rotated by the second rotation means **23.** Figure 5 represents a side view of the operating set-up of figure 12.

Figure 6 represents an operating set-up in which the gripping group **13** is raised, and the sliding elements **36** are inside the lateral guides **35;** in this raised set-up, the transverse bodies **33** and **34** are rotated so that the gripping groups **18, 18a, 19** and **19a** have substantially vertical rotation axes.

In this operating set-up, thanks to the first rotation means **22,** the container-holding group **13** is rotated with continuity with respect to the carrying carriage **11** around its first rotation axis **X1.**

The first rotation means **22,** therefore, are configured to rotate with continuity the container-holding group **13** with respect to the carrying carriage **11** around the first rotation axis **X1,** which first axis **X1** is precisely the rotation axis of the container-holding group **13.**

The terminology "to rotate with continuity" is to be understood, in a known way, that the rotation induced on the container-holding group **13** can continue for an angle greater than 360°, in the same direction of rotation, continuously, that is without interruptions, for a certain number of revolutions and/or for a certain preset time.

At the same time the containers **14, 14a, 15, 15a,** coupled to the respective gripping groups **18, 18a, 19, 19a** are rotated by the second rotation means **23.** In this way, each container **14, 14a, 15, 15a** is rotated according to a rotary motion around its own axis and according to a revolution motion around the rotation axis **X1** of the container-holding group **13.**

An application example of the machine **10** according to the invention provides that the treatments carried out by the machine **10** are executed by positioning the containers inside a tank **V** containing a paint, for carrying out a coating process by impregnation.

The first part of the impregnation step occurs by inclining the group which can be inclined by 40°- 60°, as shown in figures 5, 8 and 12, thanks to the third rotation means **24** described above.

Subsequently, the container-holding group **13** is lowered by means of the second movement means **21,** immersing the containers in the process fluid present in the tank **V.**

The containers **14, 14a, 15, 15a** are made to rotate around their own axis **X2, X3, X4, X5** at low speed, for example 5-30 revolutions per minute.

At the end of this step, the containers are extracted from the fluid and returned to the vertical position for the start of a subsequent centrifugation step.

During the centrifugation step the containers rotate around their own rotation axis **X2, X3, X4** and **X5** at low speed (5-30rpm) and at the same time they rotate around the axis of the container-holding group **13** at high speed, for example 100-500 revolutions per minute.

The revolution motion, which has the purpose of generating the centrifugal force necessary to expel the superfluous paint, has an essential function, as it allows to overcome the aforementioned drawback that occurs in traditional systems, which provide for either only the rotation of the container in the case of a single container or only the revolution in the multiple case.

In fact, thanks to the sum of the rotation and revolution effects of the containers, the continuous variation of the points of mutual contact of the treated items present in the containers and of the orientation of the cavities with respect to the direction of the centrifugal force is obtained, thus guaranteeing the total expulsion of the fluid in excess from all the single surfaces of the items.

In practice, it has been found that the invention achieves the intended aim and objects.

In particular, with the invention a machine **10** has been developed which is capable of overcoming the aforementioned drawback by varying the orientation of the containers **14, 14a, 15, 15a,** containing the pieces to be treated, relative to the direction of the centrifugal force imposed by the rotation of the container-holding group **13.**

Therefore, with the invention a machine has been developed for the handling of object-holding containers which allows a better removal of a fluid trapped in the objects present in the containers.

Furthermore, with the invention a safe and reliable machine like the handling trolleys for containers of known type has been developed.

Furthermore, with the invention a machine has been developed for the handling of object-holding containers which allows to speed up and optimize the treatment and removal times of the excess fluid with respect to the times achievable to date, thanks to the ability to operate with four containers, and possibly with more containers if properly structured.

In practice, the components and materials used could be of any type, so long as they are compatible with the specific use, as well as the contingent shapes and dimensions, according to requirements and the state of the art.

Where the characteristics and techniques mentioned in any claim are followed by reference signs, such reference signs are to be understood as having been added for the sole purpose of increasing the intelligibility of the claims and consequently such reference signs have no limiting effect on the interpretation of each element identified by way of example by such reference signs.

## Claims

1. A machine (10) for the handling of object-holding baskets in a surface coating treatment plant, comprising:
- a carrying carriage (11), for horizontal movement,
- a container-holding group (13),
- first movement means (20) configured for the movement of said carrying carriage (11) with respect to a support structure,
- second movement means (21) configured to raise and lower said container-holding group (13) with respect to said carrying carriage (11),
- first rotation means (22) configured for the rotation of said container-holding group (13) with respect to said carrying carriage (11) around a first rotation axis (X1),
**characterized in that** said container-holding group (13) comprises a central body (16), connected to said carrying carriage (11), said central body (16) being configured to carry at least two gripping groups (18, 19) for blocking corresponding object-holding containers (14, 15),
**and in that** said machine (10) comprises:
- at least two object-holding containers (14, 15), where said object-holding containers (14, 15) are constituted by baskets,
- second rotation means (23) configured for the rotation of each gripping group (18, 19) around a corresponding second own rotation axis (X2, X3),
- third rotation means (24) configured to adjust the inclination of said second rotation axes (X2, X3) of said gripping groups (18, 19) with respect to a corresponding third rotation axis (X6).

2. The machine according to claim 1, **characterized in that** said first movement means (20) comprise two opposite pairs of wheels (29), driven through a respective crankshaft by a gear reducer (30) mounted on said carrying carriage (11).

3. The machine according to one or more of the preceding claims, **characterized in that** said container-holding group (13) comprises said central body (16) which is connected to said carrying carriage (11) by means of said second movement means (21).

4. The machine according to one or more of the preceding claims, **characterized in that** said central body (16) is configured to carry four gripping groups (18, 18a, 19, 19a).

5. The machine according to one or more of the preceding claims, **characterized in that** each of said gripping groups (18, 18a, 19, 19a) is supported by a corresponding rotatory arm (31, 31a, 32, 32a).

6. The machine according to claim 5, **characterized in that** said rotatory arms are fixed in pairs, a first pair of rotary arms (31, 31a) and a second pair of rotary arms (32, 32a) being defined.

7. The machine according to claim 6, **characterized in that** said rotary arms of the pairs of rotary arms are made integral with each other by means of a corresponding transverse body (33, 34) which supports them both.

8. The machine according to one or more of the preceding claims, **characterized in that** said second movement means (21) comprise an intermediate carriage (12).

9. The machine according to one or more of the preceding claims, **characterized in that** said second rotation means (23) comprise a gear reducer (42) for each pair of such gripping groups (18, 18a, 19, 19a).

10. The machine according to claim 7, **characterized in that** said third rotation means (24) comprise actuator means for the rotation of each transverse body (33, 34) with respect to a third rotation axis (X6, X7), which third rotation axis (X6, X7) is orthogonal to a corresponding second rotation axis (X2, X3, X4, X5) of said gripping groups.

11. The machine according to one or more of the preceding claims, **characterized in that** it comprises four object-holding containers (14, 14a, 15, 15a).

12. The machine according to claims 4 and 11, **characterized in that** each gripping group (18, 18a, 19, 19a) carries a respective object-holding container (14, 14a, 15, 15a).

13. The machine according to one or more of the preceding claims, **characterized in that** said container-holding group (13) is rotated with continuity with respect to said carrying carriage (11) around its first rotation axis (X1) by means of said first rotation means (22).

14. The machine according to one or more of the preceding claims, **characterized in that** each container (14, 15) rotates according to a rotary motion around its own axis and according to a revolution motion around said rotation axis (X1) of said container-holding group (13).

15. The machine according to one or more of the preceding claims, **characterized in that** it comprises a treatment tank (V) configured to house said object-holding containers (14, 14a, 15, 15a).

## Patentansprüche

1. Maschine (10) zur Handhabung von Körben zum Halten von Gegenständen in einer Anlage zur Behandlung von Oberflächenbeschichtungen, umfassend:
- einen Trägerschlitten (11), der horizontal bewegt werden kann,
- eine Behälter-Haltegruppe (13),
- erste Bewegungsmittel (20), die für die Bewegung des Trägerschlittens (11) in Bezug auf eine Trägerstruktur ausgebildet sind,
- zweite Bewegungsmittel (21), die zum Anheben und Absenken der Behälter-Haltegruppe (13) in Bezug auf den Trägerschlitten (11) ausgebildet sind,
- erste Drehmittel (22), die für die Drehung der Behälter-Haltegruppe (13) in Bezug auf den Trägerschlitten (11) um eine erste Drehachse (X1) ausgebildet sind,
**dadurch gekennzeichnet, dass** die Behälter-Haltegruppe (13) einen zentralen Körper (16) umfasst, der mit dem Trägerschlitten (11) verbunden ist, wobei der zentrale Körper (16) so ausgebildet ist, dass er mindestens zwei Greifgruppen (18, 19) zum Blockieren entsprechender Behälter (14, 15) zum Halten von Gegenständen trägt,
**und dass** die Maschine (10) umfasst:
- mindestens zwei Behälter (14, 15) zum Halten von Gegenständen, wobei die Behälter (14, 15) zum Halten von Gegenständen durch Körbe gebildet werden,
- zweite Drehmittel (23), die für die Drehung jeder Greifgruppe (18, 19) um eine entsprechende zweite eigene Drehachse (X2, X3) ausgebildet sind,
- dritte Drehmittel (24), die so ausgebildet sind, dass sie die Neigung der zweiten Drehachsen (X2, X3) der Greifgruppen (18, 19) in Bezug auf eine entsprechende dritte Drehachse (X6) einstellen.

2. Maschine nach Anspruch 1, **dadurch gekennzeichnet, dass** die ersten Bewegungsmittel (20) zwei gegenüberliegende Paare von Rädern (29) umfassen, die über eine jeweilige Kurbelwelle durch ein auf dem Trägerschlitten (11) montiertes Untersetzungsgetriebe (30) angetrieben werden.

3. Maschine nach einem oder mehreren der vorhergehenden Ansprüche, **dadurch gekennzeichnet, dass** die Behälter-Haltegruppe (13) den Zentralkörper (16) umfasst, der mittels der zweiten Bewegungsmittel (21) mit dem Trägerschlitten (11) verbunden ist.

4. Maschine nach einem oder mehreren der vorhergehenden Ansprüche, **dadurch gekennzeichnet, dass** der zentrale Körper (16) so ausgebildet ist, dass er vier Greifgruppen (18, 18a, 19, 19a) trägt.

5. Maschine nach einem oder mehreren der vorhergehenden Ansprüche, **dadurch gekennzeichnet, dass** jede der Greifgruppen (18, 18a, 19, 19a) von einem entsprechenden Dreharm (31, 31a, 32, 32a) getragen wird.

6. Maschine nach Anspruch 5, **dadurch gekennzeichnet, dass** die Dreharme paarweise befestigt sind, wobei ein erstes Paar von Dreharmen (31, 31a) und ein zweites Paar von Dreharmen (32, 32a) definiert sind.

7. Maschine nach Anspruch 6, **dadurch gekennzeichnet, dass** die Dreharme der Dreharmpaare durch einen entsprechenden Querkörper (33, 34), der sie beide trägt, miteinander verbunden sind.

8. Maschine nach einem oder mehreren der vorhergehenden Ansprüche, **dadurch gekennzeichnet, dass** die zweiten Bewegungsmittel (21) einen Zwischenschlitten (12) umfassen.

9. Maschine nach einem oder mehreren der vorhergehenden Ansprüche, **dadurch gekennzeichnet, dass** die zweiten Rotationsmittel (23) ein Untersetzungsgetriebe (42) für jedes Paar solcher Greifgruppen (18, 18a, 19, 19a) umfassen.

10. Maschine nach Anspruch 7, **dadurch gekennzeichnet, dass** die dritten Rotationsmittel (24) Betätigungsmittel für die Rotation jedes Querkörpers (33, 34) in Bezug auf eine dritte Rotationsachse (X6, X7) umfassen, wobei die dritte Rotationsachse (X6, X7) orthogonal zu einer entsprechenden zweiten Rotationsachse (X2, X3, X4, X5) der Greifergruppen ist.

11. Maschine nach einem oder mehreren der vorhergehenden Ansprüche, **dadurch gekennzeichnet, dass** sie vier Behälter (14, 14a, 15, 15a) zum Halten von Gegenständen umfasst.

12. Maschine nach Ansprüchen 4 und 11, **dadurch gekennzeichnet, dass** jede Greifergruppe (18, 18a, 19, 19a) einen entsprechenden Behälter (14, 14a, 15, 15a) zum Halten von Gegenständen umfasst.

13. Maschine nach einem oder mehreren der vorhergehenden Ansprüche, **dadurch gekennzeichnet, dass** die Behälter-Haltegruppe (13) mit Hilfe der ersten Drehmittel (22) kontinuierlich in Bezug auf den Trägerschlitten (11) um seine erste Drehachse (X1) gedreht wird.

14. Maschine nach einem oder mehreren der vorhergehenden Ansprüche, **dadurch gekennzeichnet, dass** jeder Behälter (14, 15) gemäß einer Drehbewegung um seine eigene Achse und gemäß einer Rotationsbewegung um die Drehachse (X1) der Behälter-Haltegruppe (13) dreht.

15. Maschine nach einem oder mehreren der vorangehenden Ansprüche, **dadurch gekennzeichnet, dass** sie einen Behandlungstank (V) umfasst, der so ausgebildet ist, dass er die Behälter (14, 14a, 15, 15a) zum Halten von Gegenständen aufnehmen kann.

## Revendications

1. Machine (10) pour la manipulation de paniers porte-objets dans une installation de traitement de revêtement de surface, comprenant:
- un chariot porteur (11), pour un déplacement horizontal,
- un groupe porte-récipients (13),
- des premiers moyens de déplacement (20) configurés pour le déplacement dudit chariot porteur (11) par rapport à une structure de support,
- des seconds moyens de déplacement (21) configurés pour soulever et abaisser ledit groupe porte-récipients (13) par rapport audit chariot porteur (11),
- des premiers moyens de rotation (22) configurés pour la rotation dudit groupe porte-récipients (13) par rapport audit chariot porteur (11) autour d'un premier axe de rotation (X1),
**caractérisée en ce que** ledit groupe porte-récipients (13) comprend un corps central (16), relié audit chariot porteur (11), ledit corps central (16) étant configuré pour porter au moins deux groupes de préhension (18, 19) pour le blocage des récipients porte-objets correspondants (14, 15),
**et en ce que** ladite machine (10) comprend:
- au moins deux récipients porte-objets (14, 15), dans laquelle lesdits récipients porte-objets (14, 15) sont constitués de paniers,
- des deuxièmes moyens de rotation (23) configurés pour la rotation de chaque groupe de préhension (18, 19) autour d'un propre deuxième axe de rotation correspondant (X2, X3),
- des troisièmes moyens de rotation (24) configurés pour ajuster l'inclinaison desdits deuxièmes axes de rotation (X2, X3) desdits groupes de préhension (18, 19) par rapport à un troisième axe de rotation correspondant (X6).

2. Machine selon la revendication 1, **caractérisée en ce que** lesdits premiers moyens de déplacement (20) comprennent deux paires opposées de roues (29), entraînées par l'intermédiaire d'un vilebrequin respectif par un réducteur à engrenage (30) monté sur ledit chariot porteur (11).

3. Machine selon une ou plusieurs des revendications précédentes, **caractérisée en ce que** ledit groupe porte-récipients (13) comprend ledit corps central (16) qui est relié audit chariot porteur (11) au moyen desdits seconds moyens de déplacement (21).

4. Machine selon une ou plusieurs des revendications précédentes, **caractérisée en ce que** ledit corps central (16) est configuré pour porter quatre groupes de préhension (18, 18a, 19, 19a).

5. Machine selon une ou plusieurs des revendications précédentes, **caractérisée en ce que** chacun desdits groupes de préhension (18, 18a, 19, 19a) est supporté par un bras rotatif correspondant (31, 31a, 32, 32a).

6. Machine selon la revendication 5, **caractérisée en ce que** lesdits bras rotatifs sont fixés par paires, une première paire de bras rotatifs (31, 31a) et une seconde paire de bras rotatifs (32, 32a) étant définies.

7. Machine selon la revendication 6, **caractérisée en ce que** lesdits bras rotatifs des paires de bras rotatifs sont rendus solidaires l'un de l'autre au moyen d'un corps transversal correspondant (33, 34) qui les supporte tous les deux.

8. Machine selon une ou plusieurs des revendications précédentes, **caractérisée en ce que** lesdits seconds moyens de déplacement (21) comprennent un chariot intermédiaire (12).

9. Machine selon une ou plusieurs des revendications précédentes, **caractérisée en ce que** lesdits deuxièmes moyens de rotation (23) comprennent un réducteur à engrenage (42) pour chaque paire de tels groupes de préhension (18, 18a, 19, 19a).

10. Machine selon la revendication 7, **caractérisée en ce que** lesdits troisièmes moyens de rotation (24) comprennent des moyens d'actionnement pour la rotation de chaque corps transversal (33, 34) par rapport à un troisième axe de rotation (X6, X7), lequel troisième axe de rotation (X6, X7) est orthogonal à un deuxième axe de rotation correspondant (X2, X3, X4, X5) desdits groupes de préhension.

11. Machine selon une ou plusieurs des revendications précédentes, **caractérisée en ce qu'**elle comprend quatre récipients porte-objets (14, 14a, 15, 15a).

12. Machine selon les revendications 4 et 11, **caractérisée en ce que** chaque groupe de préhension (18, 18a, 19, 19a) porte un récipient porte-objets respectif (14, 14a, 15, 15a).

13. Machine selon une ou plusieurs des revendications précédentes, **caractérisée en ce que** ledit groupe porte-récipients (13) est mis en rotation avec continuité par rapport audit chariot porteur (11) autour de son premier axe de rotation (X1) au moyen desdits premiers moyens de rotation (22).

14. Machine selon une ou plusieurs des revendications précédentes, **caractérisée en ce que** chaque récipient (14, 15) tourne selon un mouvement de rotation autour de son propre axe et selon un mouvement de révolution autour dudit axe de rotation (X1) dudit groupe porte-récipients (13).

15. Machine selon une ou plusieurs des revendications précédentes, **caractérisée en ce qu'**elle comprend une cuve de traitement (V) configurée pour loger lesdits récipients porte-objets (14, 14a, 15, 15a).
